# EUROPEAN PATENT APPLICATION

(11) **EP 1 134 576 A2**
(43) Date of publication of application: **19.09.2001**
(21) Application number: 01106347.6
(22) Date of filing: 16.03.2001
(51) Int. Cl.: G01N 17/00

(54) **Product with feature for checking the deterioration of material properties**

(30) Priority: 16.03.2000 JP 2000073439; 16.02.2001 JP 2001039475
(71) Applicant: Ricoh Company, Ltd., Tokyo 143-8555 (JP)
(72) Inventor: Sahashi, Toshiro, c/o Ricoh Company, Ltd., Ohta-ku, Tokyo 143-8555 (JP)
(74) Representative: Schwabe - Sandmair - Marx

(57) **Abstract**

A product including a resin mold member and a deteriorating state checking portion that is worse in a weather resistance than the resin mold member.

## Description

The present invention relates to a product comprising at least one molded resin member with a feature for checking the deterioration of material properties due to exposure to environmental influences, e.g. due to weathering, exposure to sunlight or aging, of the molded resin member by visual inspection.

Presently, in most industrial products on the market, a part or the whole part thereof includes a molded member of resin, formed e.g. by injection molding or form molding of resin, regardless whether the industrial products are finished products or members of such products. In order to efficiently use resources, products are often recycled when they are not used anymore. Generally, there are two types of recycling: firstly, the product, which has been used, may by used again as it is, so that the products used are refurbished to be used again; secondly, the product may be disassembled and used as raw material for recycling. The former type of recycling is referred herein to as "recycling as it is (as a product)" and the latter type of recycling is referred herein to as "recycling as material". In the type of recycling as material, the molded resin member of the product, which has been used, is broken into pieces and new products are produced by using the pieces as raw material. In the type of recycling as it is, the product is not broken into pieces, instead it is processed by cleaning, refurbishing, etc. according to necessity, so that the product can be used again as a new or recycled product. In certain cases the product, which has been used, may also be recycled "as resources", e.g. as fuel, in order to utilize the heat generated during burning of the product.

Taking into consideration the simplicity of processing and the costs for recycling, recycling of the product "as it is" is preferable. However, if the product has been exposed to sunlight, rain water or other environmental influences while being used or transported etc., the material properties of the product deteriorate, e.g. the mechanical properties or the appearance, so that it might not be suitable anymore to recycle the product "as it is". The deterioration of the material properties might also be caused due to aging processes of the materials of the product. In such a case, the product must be recycled instead "as material" for producing new products or as "resources" for fuel generation.

For the recycling of products, several processing methods as described above exist. In order to determine a suitable processing method for recycling, it is necessary to determine the deterioration of the material properties of the product, which has been used, easily and reliably.

Conventionally, it has been difficult to assess visually the extent to which the material properties of a molded resin member have been deteriorated, e.g. due to weathering or aging. Therefore, it has been difficult to determine instantly a suitable processing method for recycling of a used product.

Japanese Laid Open Patent Publication No. 10-240081 discloses a method, wherein the number of times of use with respect to an apparatus or member of a product is recorded for recycling and the record is used as data for determining the processing method for recycling. However, according to this method, the structure of the product is relatively complicated.

Accordingly, an object of the present invention is to provide a product, where the deterioration of material properties of molded resin members of the product can be assessed simply and reliably by visual inspection.

This problem is solved by a product according to claims 1 and by a method according to any of claims 13, 24 and 25. The dependent claims are directed to further advantageous embodiments according to the present invention.

According to a preferred embodiment of the present invention, a product includes a resin mold member and a deteriorating state checking portion that is worse in a weather resistance than the resin mold member.

Further, the deteriorating state checking portion is provided to the molded resin member.

Further, the deteriorating state checking portion is exposed to an outside of the product.

Further, the molded resin member is made of a material which is less than two in a weathering resistance value ΔE, and the deteriorating state checking portion is made of a material which is four or more in the weathering resistance value ΔE.

Further, the deteriorating state checking portion is detachably provided to the molded resin member.

Further, when the product is put under an ordinary using state and the product is divided into an upper portion and a lower portion with respect to a middle height position of a whole height thereof, the deteriorating state checking portion is formed at least in the upper portion.

Further, the product of claim 6, wherein the deteriorating state checking portion is exposed.

Still further, an installing hole for installing, to the product, another product other than the product having the molded resin member, is formed in the molded resin member, and the deteriorating state checking portion is provided in the installing hole.

According to another preferred embodiment of the present invention, a product includes a molded resin member, and a deteriorating state checking device including a capacity changing material that is changed in its capacity by absorbing water and a storing portion which allows rain water to enter, wherein the capacity changing material is stored in the storing portion of the deteriorating state checking device.

Further, the deteriorating state checking device is provided to the molded resin member.

Further, the deteriorating state checking device further including an opening such that the capacity changing material in the storing portion can be seen from an outside of the deteriorating state checking device.

Further, the capacity changing material is a powder which is decreased in its capacity by absorbing water.

Further, when the product is put under an ordinary using state and the product is divided into an upper portion and a lower portion with respect to a middle height position of a whole height thereof, the deteriorating state checking device is provided at least in the upper portion.

Further, the deteriorating state checking device is exposed.

Further, the deteriorating state checking device is detachably provided to the molded resin member.

Further, an installing hole for installing, to the product, another product other than the product having the molded resin member, is formed in the molded resin member, and the deteriorating state checking device is set in the installing hole.

Still further, the product is an exterior cover of an apparatus.

According to another preferred embodiment of the present invention, a method of checking a deteriorating state of a product includes checking a deteriorating state of a deteriorating state checking portion of the product, that is worse in a weathering resistance than a molded resin member of the product.

A more complete appreciation of the present invention and many of the attendant advantages thereof will be readily obtained as the same becomes better understood by reference to the following detailed description when considered in conjunction with accompanying drawings, wherein:
Figure 1 is a perspective view illustrating an appearance of an image forming apparatus with respect to an embodiment of a product whose deteriorating state can be recognized of the present invention;
Figure 2 is an enlarged section view from the viewpoint of line II - II in Figure 1;
Figure 3 is a schematic perspective view illustrating the image forming apparatus in Figure 1 which connects a peripheral;
Figure 4 is a schematic perspective view illustrating the image forming apparatus in Figure 3 which does not connect a peripheral;
Figure 5 is an enlarged section view from the viewpoint of line V - V in Figure 1;
Figure 6 is an enlarged section view from the viewpoint of a direction indicated by an arrow VI in Figure 5; and
Figure 7 is a perspective view illustrating a case where a storing case containing capacity or volume changing material is installed to a molded resin member.

Referring now to the drawings, wherein like reference numerals designate identical or corresponding parts throughout the several views, preferred embodiments of the present invention are described.

The present invention can be applied to any products, for example, an image forming apparatus such as a copying machine etc., other electric products, vehicles such as an automobile , measurement equipment, household products, furniture, toys, and a member used in these machine, products etc. However, as an example for an embodiment of the present invention, an exterior cover of an image forming apparatus will be described hereinafter.

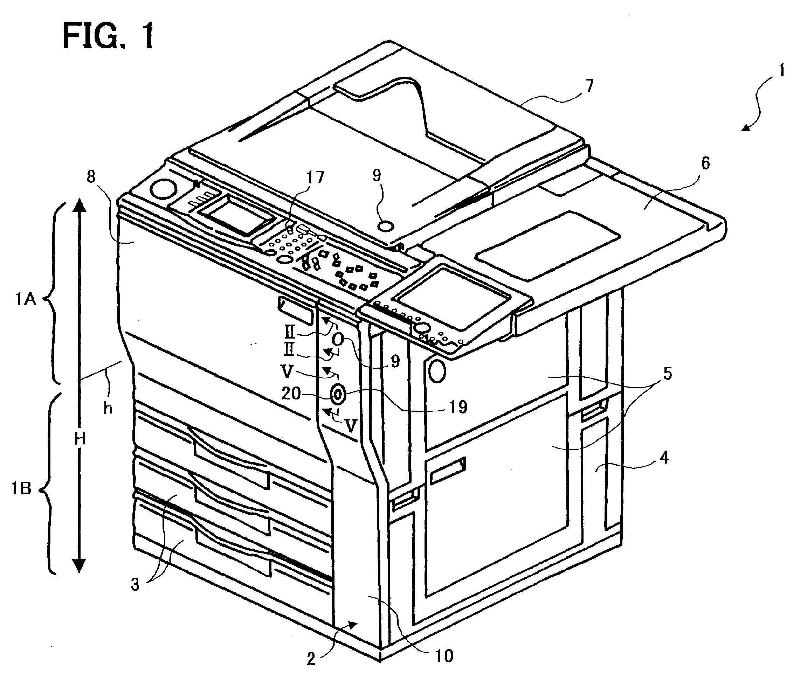

Figure 1 is a perspective view illustrating an appearance of a copying machine as an example for an image forming apparatus. An exterior cover 1 of the image forming apparatus includes a front cover 2 positioned at a front side of the apparatus, a front door 8, a paper feeding tray cover 3, a side cover 4 positioned at a right side of the apparatus, a side cover positioned at a left side opposite to the right side of the apparatus, an upper cover 6 positioned at an upper side of the apparatus, and a pressing board 7 for pressing a document, which is positioned on the upper cover 6.

The exterior cover 1 is made of a molded resin member, and, a deteriorating state checking portion is provided in the exterior cover 1. In the embodiment illustrated in Figure 1, the deteriorating state checking portion 9 is formed in the front cover 2 and an upper surface of the pressing board 7 respectively, of course, the deteriorating state checking portion 9 can be formed in any other cover member. Describing the front cover 2 as an example, the front cover 2 has a molded resin member 10 which is configured as a body of the front cover 2. The deteriorating state checking portion 9 is installed in the molded resin member 10 so that it is exposed to the environment outside. The deteriorating state checking portion 9 is made of material of a weathering resistance or of aging properties worse than that of the molded resin member 10 of the front cover 2 and other cover members. That is, when the molded resin member 10 and the deteriorating state checking portion 9 are exposed to sunlight or other environmental influences, for example at the same time, the deteriorating state checking portion 9 changes its color to a larger extent than the molded resin member 10. The pressing board 7 includes the checking portion 9 in the substantially same manner as the front cover 2. In the description below, the molded resin member of each cover member other than the front cover 2 is also designated by numeral 10.

When the image forming apparatus is not used anymore by a user, the image forming apparatus which has been used is transported to a recycling dealer, and as described above, it is determined whether the exterior cover 1 can be recycled as it is, as material, or as resources.

The environmental or aging conditions to which an image forming apparatus is exposed during or after use are manifold and in some cases it might be necessary to use the image forming apparatus under severe circumstance. Also, when the image forming apparatus has been transported to a recycling dealer, the apparatus may have been roughly handled and may have been exposed excessively to sunlight or rain water or other environmental or aging influences in some cases. When the image forming apparatus has been exposed to such conditions, the mechanical properties of the exterior cover 1 such as tensile strength, impact strength, bending strength etc. or the appearance such as gloss etc. may be deteriorated greatly. In this case, it is not proper to recycle each member of the exterior cover 1 as it is, and therefore, the exterior cover 1 is recycled as material for manufacturing a new product, or is recycled as resources. Only when the deterioration of the exterior cover 1 has not proceeded excessively, the exterior cover is recycled as it is.

For determining whether the exterior cover 1 can be recycled as it is, as material, or as resources, the deteriorating state checking portion 9 described above is used. As described above, the deteriorating state checking portion 9 is made of material of a weathering resistance or of aging properties worse than that of the molded resin member 10 of the exterior cover 1. By visually inspecting the color of the deteriorating state checking portion 9, it can be instantly known to what environmental or aging influences the molded resin member 10 has been exposed, or to what degree the deterioration of the material properties of the molded resin member 10 has progressed, so that a suitable processing method for recycling the exterior cover 1 can be instantly determined. Once the color of the deteriorating state checking portion 9 has changed, it does not return to the original color, so that the deteriorating state of the molded resin member 10 can be correctly understood. Thereby, one can easily and reliably assess to what extent the exterior cover 1 has been exposed to the outside environment, simply by visually recognizing the change of color of the deteriorating state checking portion, without performing complicated work to measure the mechanical properties of the molded resin member with a measurement equipment.

As described above, a product whose deteriorating state can be recognized, e.g. the exterior cover 1 in the above embodiment, includes at least one molded resin member and a deteriorating state checking portion which has a weathering resistance or aging properties that are worse than that of the molded resin member of the product. With such a structure, the deterioration of the material properties of the molded resin member can be easily and reliably assessed at low product costs.

Generally, if a molded resin member is exposed to severe environmental or aging influences , e.g. if it is excessively exposed to sunlight or rain water etc., the color of the molded resin member is changed. Therefore, the color difference between the color of the molded resin member before being exposed to certain conditions during use and the color of the molded resin member after exposure to these conditions during use depends on the weathering resistance ΔE or on the aging properties of the molded resin member. As the value of the weathering resistance ΔE or of the aging properties is smaller, the weathering resistance or the aging properties of the molded resin member 10 may be higher. By configuring the molded resin member 10 of each cover member with a material which is less than 2 in the weathering resistance or in the aging or wearing properties, the weathering resistance ΔE or the aging or wearing properties of the exterior cover 1 can be made high. On the other hand, if the weathering resistance ΔE of the deteriorating state checking portion 9 is set to 4 or more, because the color of the deteriorating state checking portion changes significantly if the exterior cover 1 is exposed to severe environmental or usage influences, the deterioration of the material properties of the molded resin member 10 can be properly recognized. For example, the molded resin member 10 can be made by ABS resin of 1.2 in the weathering resistance ΔE and the deteriorating state checking portion 9 by a resin of 4.6 in the weathering resistance ΔE, so that the difference between the weathering resistances ΔE is made large.

As described above, by configuring a molded resin member with a material of less than 2 in the weathering resistance ΔE and a checking portion of deteriorating state with a the material of 4 or more in the weathering resistance ΔE, a product whose deteriorating state can be correctly recognized, can be provided.

The deteriorating state checking portion 9 can be formed integrally with the molded resin member 10. When the exterior cover 1 is recycled as it is, the exterior cover 1 is used as an exterior cover of a new image forming apparatus, again. Therefore, when the new image forming apparatus has been used again to the end, it becomes necessary to determine whether the exterior cover 1 can be further recycled as it is, or should be recycled as material or as resources instead, by recognizing the deteriorating state of the exterior cover 1, and at this time, the deteriorating state checking portion 9 is necessary.

Therefore, by configuring the deteriorating state checking portion 9 as a member detachable to the molded resin member 10, when the exterior cover 1 is recycled as it is, the deteriorating state checking portion 9 which has been used can be removed from the molded resin member 10, and a new deteriorating state checking portion 9 can be installed to the molded resin member 10 to be recycled as it is. Thereby, when the image forming apparatus has been used again, it can be easily judged whether the exterior cover 1 can be further recycled as it is, or should be recycled as material or as resources instead, by visually inspecting the deteriorating state checking portion 9 of the exterior cover 1.

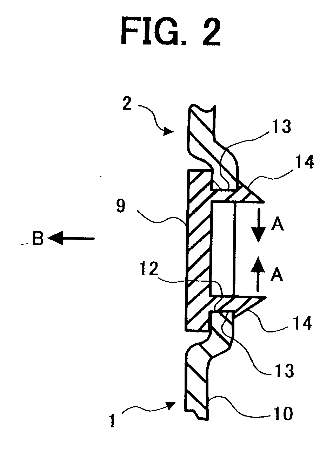

In order to install the deteriorating state checking portion 9 to the molded resin member 10 in a detachable manner, for example, an installing hole 12 is formed in the molded resin member 10 as illustrated in Figure 2. Plural elastic leg portions 13 formed in the deteriorating state checking portion 9 are inserted into the installing hole 12, and nail portions 14 of tips of the leg portions 13 are configured so as to be engaged with edge portions of the installing hole 12. When the deteriorating state checking portion 9 is removed, the leg portions 13 are elastically bent into the directions indicated by the arrows A, and the nail portions 14 are removed from the edge portions of the installing hole, and further the deteriorating state checking portion 9 is pulled out to the outside as indicated by the arrow B.

While using an image forming apparatus, or when the image forming apparatus which has been used is carried from a user to a recycling dealer, it is more likely that an upper portion of the exterior cover 1 is exposed to sunlight, rain water or other environmental influences than a lower portion thereof. Therefore, if the deteriorating state checking portion 9 is formed in the upper portion of the exterior cover 1 rather than in the lower portion of the exterior cover 1 as illustrated in Figure 1, the deteriorating state of the exterior cover 1 can be correctly understood. Namely, as illustrated in Figure 1, when a product, for example the exterior cover 1 in the embodiment, is put in an ordinary using state, and when the product is divided into an upper portion 1A and a lower portion 1B divided by a middle height position h of the whole height H, the deteriorating state checking portion 9 may be formed as being exposed to the outside at the upper portion 1A of the upper portion 1A and the lower one 1B. Thereby, the deteriorating state of the product can be more accurately recognized.

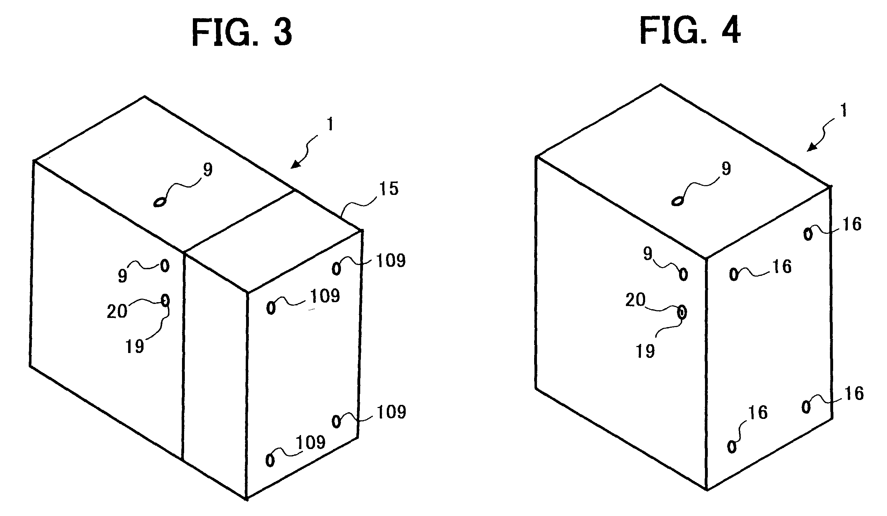

As illustrated in Figure 3, in apparatuses (e.g. in an image forming apparatus), a peripheral equipment such as a gathering machine or a stapler etc. is connected or mounted to the exterior cover 1 in some cases. In such a case, as illustrated in Figure 4, in the molded resin member of the exterior cover 1, installing holes 16 for connecting the peripheral equipment 15 (see Figure 3) are formed. Generally, the peripheral equipment 15 is installed by the desire of an user. Therefore, when the user does not so desire, the peripheral equipment is not connected to the image forming apparatus. When the peripheral equipment is not connected, if the installing holes 16 are exposed to the outside, the appearance is reduced. Therefore, conventionally, a deteriorated appearance is prevented by setting a cap to each of the installing holes 16.

Therefore, a cap for the installing holes 16, which is necessary when the peripheral equipment 15 is not connected, can be substituted by installing the deteriorating state checking portion 9 in the installing holes 16 or the total number of caps can reduced. Furthermore, an installing hole for installing the deteriorating state checking portion 9 does not have to be formed in other parts of the exterior cover 1. Thereby advantages like lower costs of the image forming apparatus can be obtained. When the peripheral equipment 15 is connected, the deteriorating state checking portion can be installed also in the peripheral equipment 15, as designated by numeral 109 in Figure 3. Such a structure can be also applied to a case where a product other than the peripheral equipment is connected to the exterior cover 1.

As described above, when the installing hole 16 is formed in a molded resin member of a product for installing a product (the peripheral equipment 15 in this embodiment) other than the product (the exterior cover 1 in this embodiment) having the molded resin member, the cost of the product can be decreased by installing the deteriorating state checking portion 9 in the installing hole 16.

In the embodiment described above, the deteriorating state checking portion 9 is formed as an exclusive element for recognizing the deteriorating state or the deterioration of material properties of the molded resin member. However, the deteriorating state checking portion 9 can be also configured as a member which is originally necessary or functional in a product such as an image forming apparatus etc., for example, as an operation button 17 as illustrated in Figure 1.

As described above, when an image forming apparatus which has been used is carried to a recycling dealer, the apparatus is generally roughly handled. For example, the apparatus is put in a place having no roof, in which case the exterior cover 1 is directly exposed to rain water in some cases. In such a case, the deterioration of the exterior cover 1 is promoted. Therefore, in order to reliably recognize that the exterior cover 1 has been exposed to rain water, it is preferable that the exterior cover 1 is configured as described below with respect to another embodiment of the present invention.

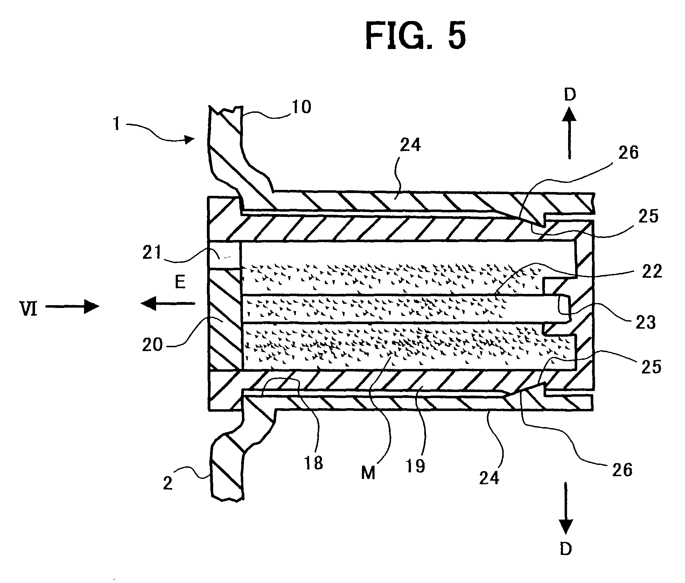

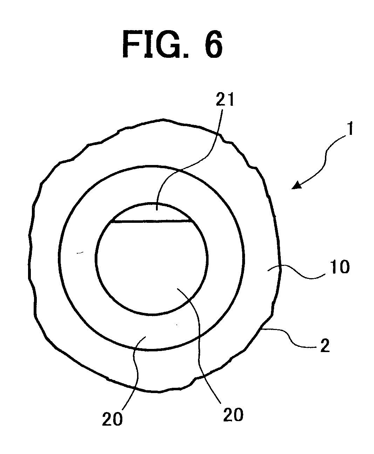

Figure 5 is an enlarged section view from the viewpoint of V - V line in Figure 1, and Figure 6 is a view from the direction indicated by arrow VI in Figure 5. As illustrated in Figures 5 and 6, a storing case 19 is engaged and fixed with an installing hole 18 which is formed in the molded resin member 10 of the exterior cover 1. In a storing portion of the storing case 19, a capacity or volume changing material M, which changes in its capacity or volume by absorbing water, is enclosed. The opening of the storing case 19 is closed by a cap 20 except at an upper portion thereof. The capacity or volume changing material M in the storing case 19 can be seen (from outside) through a gap 21 in the upper portion of the opening. An end portion of a supporting rod 22 is fixed to the cap 20 and a tip portion of the supporting rod 22 is engaged with a concave portion 23 which is formed in a bottom of the storing case 19, so that the cap is prevented from being removed from the opening. The capacity or volume changing material M is a kind of material that, after having absorbed water, changes in capacity or volume, even when the water is evaporated and removed. After the change, the capacity or volume of the material is maintained. For example, the capacity or volume changing material M may be a powder which decreases in capacity or volume by absorbing water.

When an image forming apparatus which has been used is carried to a recycling dealer, if the image forming apparatus is exposed to rain water, the rain water enters an inside of the storing case 19 through the gap 21. Thereby, the capacity or volume changing material M absorbs the rain water and thereby the capacity or volume thereof is decreased. Unless the image forming apparatus is exposed to the rain water, the capacity or volume of the capacity or volume changing material M will not change. Therefore, when the recycling dealer wants to determine the recycling method of the exterior cover 1, he can instantly recognize whether or not the exterior cover 1 has been exposed to rain water, simply by looking into the inside of the storing case 19 and by recognizing whether or not the capacity or volume changing material M has decreased in capacity or volume.

As described above, the capacity changing material M which changes in capacity by absorbing water, is provided in a molded resin member of a product, and the capacity changing material M is stored in a storing portion where rain water may enter so that the capacity or volume changing material M can been seen from the outside. Thereby, it is easily recognized whether or not the molded resin member is exposed to rain water and thereby the deterioration of material properties thereof due to the exposure to rain water can be recognized.

In the case of the capacity or volume changing material M, too, for the same reason as in the case of the deteriorating state checking portion 9, when a product, for example the exterior cover 1 in this embodiment, is put under an ordinary using circumstance, and when it is divided into an upper portion 1A and a lower portion 1B divided by a middle height position h of the whole height H, it is preferred that the capacity changing material M is provided at least in the upper portion 1A of an upper portion 1A and a lower portion 1B.

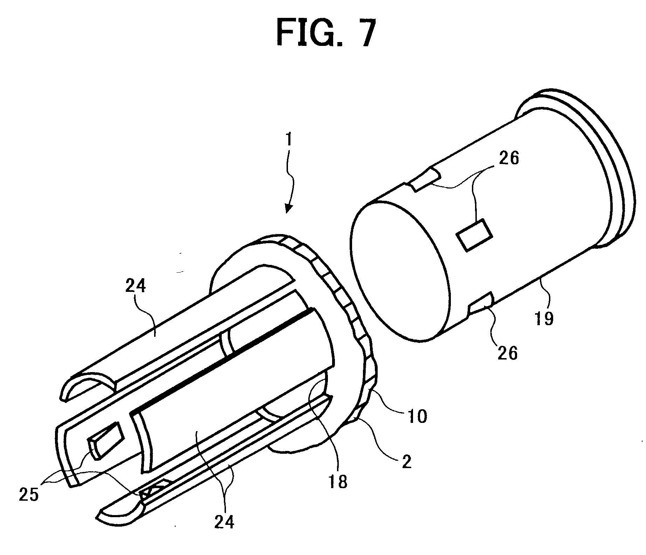

A storing portion which stores the capacity or volume changing material M may be formed in the molded resin member 10 itself, such that the storing portion is a part of the molded resin member 10. However, by configuring the storing portion of the capacity or volume changing material M by a storing case 19 which is detachably installed to the molded resin member 10, the same technical advantage as the case where the checking portion of deteriorating state 9 is detachably installed to the molded resin member 10 as described in the above embodiment, can be obtained. In this case, as illustrated in Figures 5 and 7, in an inner surface of the molded resin member 10 around the installing hole 18, plural elastic guides 24 are formed, and in addition, nails 25 are formed in surfaces of the guides 24 facing each other. The storing case 19 is inserted into the installing hole 18 as illustrated in Figure 5, and an engaging groove 26 formed in an outer circumference portion of the storing case 15 is engaged with the above nail 25 and the storing case 19 is fixed to the molded resin member 10. When the storing case 19 is removed from the molded resin member 10, the guides 24 are elastically changed in an enlarging direction as indicated by arrows D in Figure 5, and the nails 25 are removed from the engaging groove 26, and further the storing case 19 is pulled out to the outside as indicated by an arrow sign E in Figure 5.

Further, as illustrated in Figures 3 and 4, when the installing hole 16 for installing a product (the peripheral equipment 15 in Figure 3) other than a product having a molded resin member (the exterior cover 1 in Figures 3 and 4) is formed in a molded resin member of the product, the storing case 19 as illustrated in Figure 5 can be installed to the installing hole 16 when the peripheral equipment 15 is not connected. Thereby, a cap for the installing hole 16 which has been necessary conventionally can be eliminated, or the number of the caps can be decreased. Further, the exclusive installing hole for installing the storing case 19 does not have to be formed in the molded resin member.

The exterior cover of an apparatus such as an image forming apparatus is likely to be exposed to sunlight, rain water or other environmental influences, and therefore the present invention can be applied to such exterior covers of various products. Advantageously, however, as described above, the present invention applies to any products which are made of only one molded resin member or to products including a molded resin member as parts thereof, regardless of whether the products are finished products or members thereof.

According to one aspect of the present invention, the deteriorating state of a molded resin member can be recognized visually in a simple manner.

Further, according to another aspect of the present invention, a deteriorating state checking portion can be simply exchanged.

Furthermore, according to another aspect of the present invention, an exclusive installing hole for installing the deteriorating state checking portion does not have to be formed in the molded resin member.

Still further, according to another aspect of the present invention, a storing case for storing the deteriorating checking portion can be simply exchanged.

Still furthermore, according to another aspect of the present invention, an exclusive installing hole for installing the storing case does not have to be formed.

While it has been described above that the embodiments of this invention comprise molded resin member or resin mold members, the present invention may also be applied to members of other products that change their properties when they are exposed to environmental influences. The expression "environmental influences" as used herein relates to any external influences to which the product might be exposed during its normal lifetime, e.g. in an office environment, during storage at dealers or during transport. The term "aging properties" as used herein relates to any material properties that change due to the exposure of the product to external influences, e.g. heat, sunlight or wearing during normal use.

Numerous additional modifications and variations of the present invention are possible in light of the above teachings. It is therefore to be understood that within the scope of the appended claims, the present invention may be practiced otherwise than as specifically described herein.

The present application claims priority and contains subject member related to Japanese Patent Application Nos. 2000-073439 filed on March 16, 2000 and 2001-039475 filed on February 22, 2001 with the Japanese Patent Office, the entire contents of which are hereby incorporated by reference.

## Claims

1. A product comprising:
at least one molded resin member (2 - 8); and
at least one deteriorating state checking portion (9) having a weathering resistance or aging properties worse than that of the at least one molded resin member.

2. The product of claim 1, wherein the deteriorating state checking portion (9) is provided or mounted to the molded resin member (2 - 8).

3. The product of claim 1 or 2, wherein the deteriorating state checking portion (9) is exposed to an outside of the product.

4. The product of any of claims 1 to 3, wherein the molded resin member is made of a material with a weathering resistance value ΔE, which is smaller than two and wherein the deteriorating state checking portion (9) is made of a material with a weathering resistance value ΔE, which is four or larger.

5. The product of any of claims 2 to 4, wherein the deteriorating state checking portion (9) is detachably provided or mounted to the molded resin member (2 - 8).

6. The product of any of claims 1 to 5, wherein the product is divided into an upper portion (1A) and a lower portion (1B) with respect to a middle height position (h) of a whole height (H) thereof and wherein the deteriorating state checking portion (9) is formed at least in the upper portion, when the product is under an ordinary using state.

7. The product of claim 6, wherein the deteriorating state checking portion (9) is exposed.

8. The product of any of claims 2 to 7, wherein an installing hole for installing, to the product, another product other than the product having the molded resin member is formed in the molded resin member and the deteriorating state checking portion is provided in the installing hole.

9. The product of any of the preceding claims,
wherein the deteriorating state checking portion (9) includes a capacity or volume changing material (M) that changes its capacity or volume by absorbing water and a storing portion which allows rain water to enter;
wherein the capacity or volume changing material is stored in the storing portion of the deteriorating state checking portion (9).

10. The product of claim 9, the deteriorating state checking portion (9) further including an opening (21) so that the capacity or volume changing material (M) in the storing portion can be seen from an outside of the deteriorating state checking portion (9).

11. The product of claim 9 or 10, wherein the capacity or volume changing material (M) is a powder which decreases in capacity or volume by absorbing water.

12. The product of any of claims 1 to 11, wherein the product is an exterior cover of an apparatus, in particular of an image forming apparatus.

13. A method of checking a deterioration of material properties of a product due to weathering or aging, comprising the steps of:
providing at least one molded resin member (2 - 8);
providing at least one deteriorating state checking portion (9) having a weathering resistance or aging properties worse than that of the at least one molded resin member (2 - 8); and
checking the deterioration of the material properties by inspecting the deteriorating state checking portion (9) of the product.

14. The method of claim 13, wherein the deteriorating state checking portion (9) is provided to the molded resin member (2 - 8).

15. The method of claim 13 or 14, wherein the deteriorating state checking portion (9) is exposed to an outside of the product.

16. The method of any of claims 13 to 14, wherein the molded resin member is made of a material with a weathering resistance value ΔE, which is smaller than two, and wherein the deteriorating state checking portion (9) is made of a material with a weathering resistance value ΔE, which is four or larger.

17. The method of any of claims 14 to 16, wherein the deteriorating state checking portion (9) is detachably provided or mounted to the molded resin member.

18. The method of any of claims 13 to 17, wherein the product is divided into an upper portion (1A) and a lower portion (1B) with respect to a middle height position (h) of a whole height (H) thereof and wherein the deteriorating state checking portion (9) is formed at least in the upper portion, when the product is under an ordinary using state.

19. The method of claim 18, wherein the deteriorating state checking portion (9) is exposed.

20. The method of any of claims 13 to 19, wherein an installing hole for installing, to the product, another product other than the product having the molded resin member is formed in the molded resin member, and the deteriorating state checking portion is provided in the installing hole.

21. The method of any of claims 13 to 20, wherein the product is an exterior cover of an apparatus, in particular of an image forming apparatus.

22. The method of any of claims 13 to 21, further comprising the step of accommodating a capacity or volume changing material in said deteriorating checking portion (9) that changes in capacity or volume by absorbing water.

23. The method of claim 22, wherein the capacity or volume changing material is a powder which decreases in capacity or volume by absorbing water.

24. A method for recycling a product according to any of claims 1 to 12, comprising the steps of a method according to any of claims 13 to 23 and further comprising:
replacing the deteriorating state checking portion (9) of said product with a new deteriorating state checking portion (9).

25. A method for recycling a product according to any of claims 1 to 12, comprising the steps of claim 22 or 23, wherein the capacity or volume changing material is replaced by a fresh capacity or volume changing material.

26. The method of claim 25, wherein the capacity or volume changing material is a powder which decreases in capacity or volume by absorbing water.

27. The method of claim 25 or 26, wherein the product is an exterior cover of an apparatus, in particular of an image forming apparatus.
